# EUROPEAN PATENT APPLICATION

(11) **EP 2 129 031 A1**
(43) Date of publication of application: **02.12.2009**
(21) Application number: 08711076.3
(22) Date of filing: 08.02.2008
(51) Int. Cl.: H04L 1/16, H04B 7/26, H04L 29/08

(54) **RETRANSMISSION CONTROL METHOD AND RECEIVING SIDE APPARATUS**

(30) Priority: 09.02.2007 JP 2007031382
(71) Applicant: NTT DoCoMo, Inc., Chiyoda-ku Tokyo 100-6150 (JP)
(72) Inventor: HARADA, Atsushui, Tokyo 100-6150 (JP); UMESH, Anil, Tokyo 100-6150 (JP)
(74) Representative: HOFFMANN EITLE
(86) International application number: PCT/JP2008/052197
(87) International publication number: WO 2008/096877

(57) **Abstract**

A retransmission control method according to the present invention includes a physical control channel transmitting step of transmitting, at a transmitting side apparatus 10, a new data indicator updated upon transmission of a new packet, through a physical control channel associated with a physical data channel; and a transmission acknowledgement information transmitting step of performing, at a receiving side apparatus 30, decoding processing on a packet received through the physical data channel at a current transmission opportunity, and transmitting, at the receiving side apparatus 30, transmission acknowledgment information on the packet on the basis of a result of the decoding processing, even when the receiving side apparatus 30 has transmitted transmission acknowledgement information indicating a success of reception of a packet at a last transmission opportunity, and when a new data indicator received through the physical control channel at the current transmission opportunity is not updated.

## Description

### Technical Field

The present invention relates to a retransmission control method and receiving side apparatus with which a retransmission control for a packet transmitted from a transmitting side apparatus to the receiving side apparatus through a physical data channel is performed on the basis of transmission acknowledgement information on the packet.

### Background Art

Heretofore, an HSDPA (High Speed Downlink Packet Access) mobile communication system has been known as a mobile communication system in which a retransmission control is performed (see Non-Patent Document 1, for example).

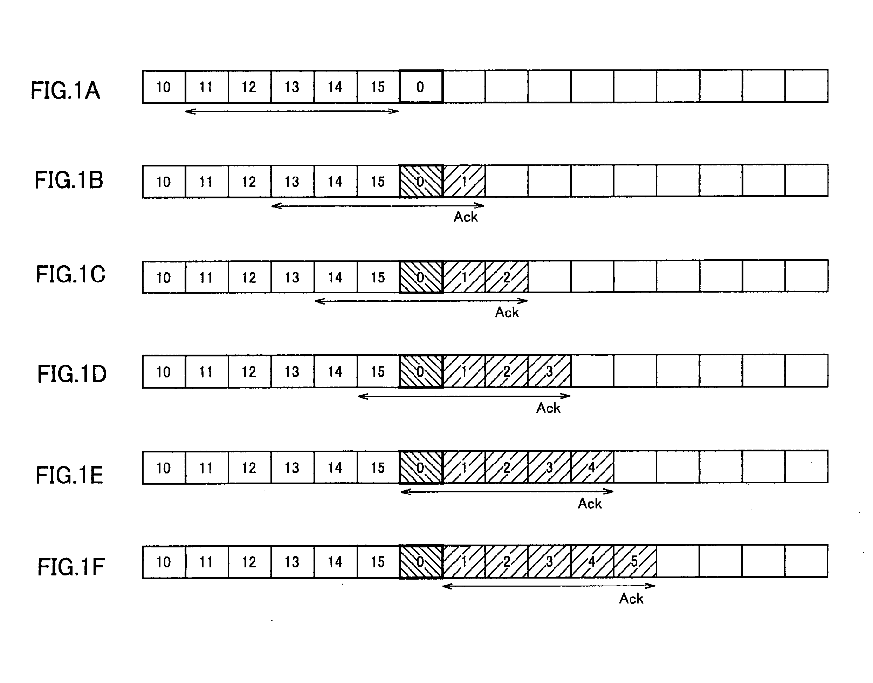

With reference to Fig. 5 as well as Fig. 1 to Fig. 5, a description will be given of the retransmission control in the conventional HSDPA mobile communication system.

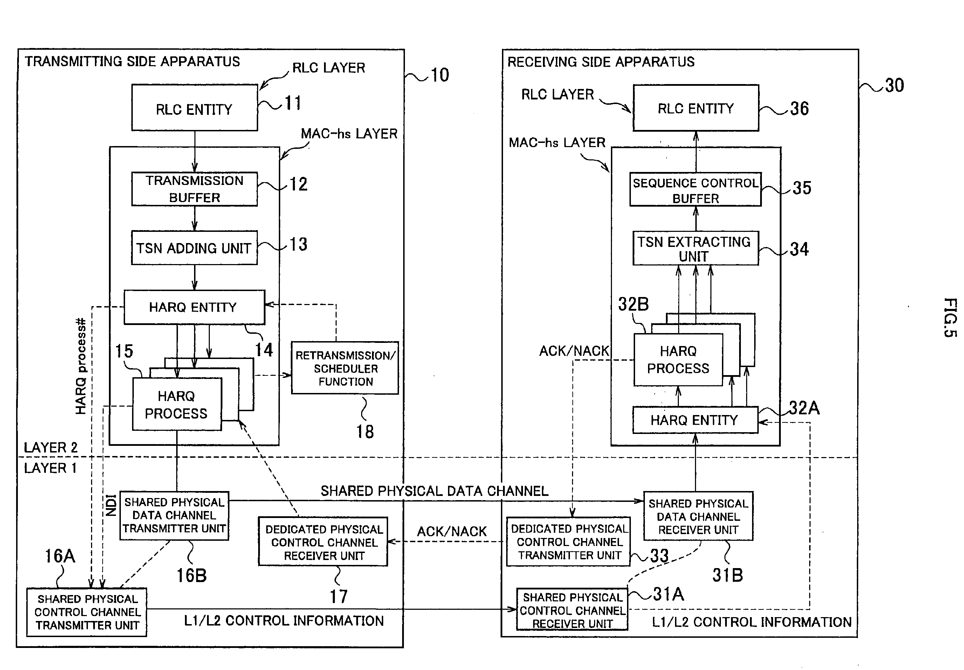

The retransmission control in the HSDPA mobile communication system having the configuration shown in Fig. 5 is implemented by an "HARQ (Hybrid Automatic Repeat reQuest) retransmission control" in an MAC-hs layer and an "ARQ retransmission control" in an RLC layer.

In this HSDPA mobile communication system, the ARQ retransmission control in the RLC layer is configured to ultimately compensate for a packet reception error and a packet decoding error which cannot be compensated in the MAC-hs layer. Moreover, in the HSDPA mobile communication system, the ARQ retransmission control in the RLC layer is configured to ultimately compensate for a missing (loss) of a packet due to, for example, a false detection of transmission acknowledgement information (ACK/NACK) in the HARQ retransmission control (for example, in the case that a mobile station falsely detects an ACK as being an NACK, or in the case that a mobile station falsely detects reception of an ACK from a mobile station actually in a DTX state).

With reference to Fig. 1A to Fig. 1F, a specific description will be given of the retransmission control in the HSDPA mobile communication system. Hereinbelow, the description will be given under the assumption that a single HARQ process is performed. In addition, a "TSN (Transmission Sequence Number)" assigned to each packet cyclically takes a value from 0 to 15.

In Fig. 1A, an MAC-hs layer of a receiving side apparatus (mobile station) 30 successfully receives and decodes a packet "TSN=15". Accordingly, the MAC-hs layer stores the packet "TSN=15" in a sequence control buffer 35, and concurrently extracts a packet "TSN=10" from the sequence control buffer 35 and then the MAC-hs layer forwards the extracted packet to an RLC layer. Then, the "TSN" of the packet which the receiving side apparatus 30 expects to receive next is set at "0".

In Fig. 1B, however, the packet "TSN=0" is lost in the MAC-hs layer of the receiving side apparatus 30, because of any of the above-mentioned errors (such as reception error, decoding error, and false detection). Accordingly, although the "TSN" of the packet which the receiving side apparatus 30 expects to receive next remains at "0", a transmitting side apparatus (base station) 10 transmits a packet "TSN=1" to the receiving side apparatus 30 since the transmitting side apparatus 10 has not received an NACK for the packet "TSN=0".

Thereafter, the MAC-hs layer of the receiving side apparatus 30 successfully receives and decodes the packet "TSN=1". Accordingly, the MAC-hs layer stores the packet "TSN=1" in the sequence control buffer 35, and concurrently extracts a packet "TSN=12" from the sequence control buffer 35 and then forwards the extracted packet to the RLC layer.

Then, the same operation is repeated in Fig. 1C to Fig. 1E. Meanwhile, the "TSN" of the packet which the receiving side apparatus 30 expects to receive next remains at "0".

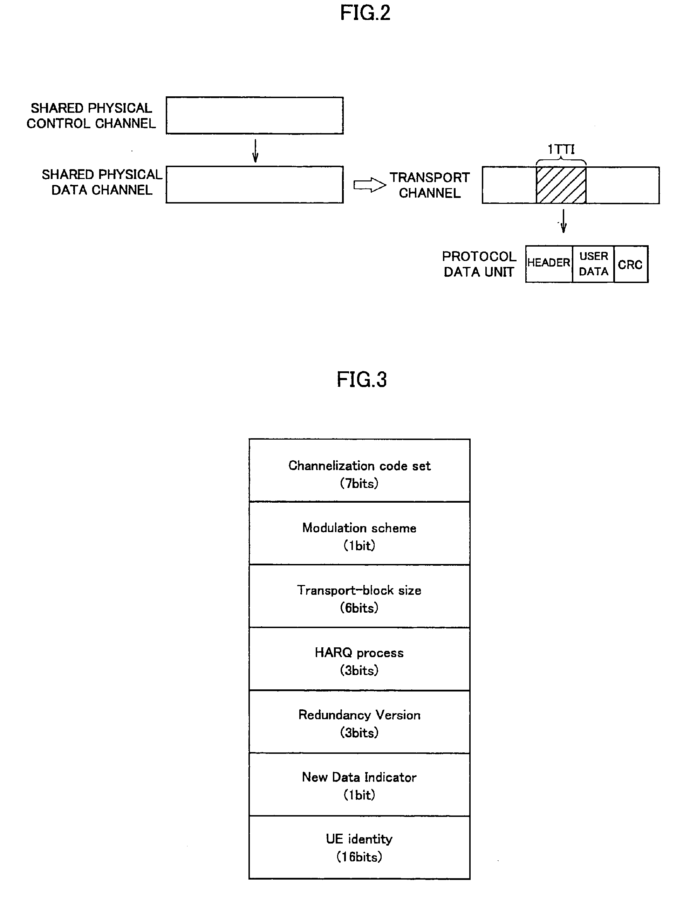

Thereafter, in Fig. 2F, the MAC-hs layer of the receiving side apparatus 30 successfully receives and decodes a packet "TSN=5". Accordingly, the MAC-hs layer stores the packet "TSN=5" in the sequence control buffer 35.

At this time, the MAC-hs layer of the receiving side apparatus 30 attempts to extract the packet "TSN=0" from the sequence control buffer 35 so as to pass the packet "TSN=0" to the RLC layer, but fails to extract the packet "TSN=0" since the packet "TSN=0" is not stored in the sequence control buffer 35.

Consequently, an ARQ entity 36 of the RLC layer detects the missing (loss) of the packet "TSN=0", and requests the transmitting side apparatus 10 to retransmit the packet "TSN=0" by the ARQ retransmission control.

As shown in Fig. 5, in the HSDPA mobile communication system, the base station is configured to transmit L1/L2 control information to the mobile station through an "HS-SCCH (High Speed Shared Control Channel)" as a shared physical control channel (see Fig.2), and to transmit a packet to the mobile station through an "HS-PDSCH (High Speed Physical Downlink Shared Channel)" as a shared physical data channel.

Here, the HS-SCCH is associated with the HS-PDSCH. The mobile station is configured to receive a packet included in the HS-PDSCH associated with the HS-SCCH, on the basis of the received L1/L2 control information included in the HS-SCCH.

Moreover, in the HSDPA mobile communication system, an "HS-DSCH (High Speed Downlink Shared Channel)" is configured to be multiplexed on the HS-PDSCH, as a transport channel.

Moreover, in the HSDPA mobile communication system, a single protocol data unit ("MAC-hs PDU") (hereinafter referred to as a packet) is configured to be transmitted at each TTI (Transmission Time Interval) of the HS-DSCH. Note that the "TSN" of each packet is included in the header portion of the packet.

Moreover, in the HSDPA mobile communication system, the mobile station is configured to determine whether or not each TTI of the HS-DSCH is assigned to the mobile station itself, on the basis of a "UE identity (16 bits) " included in the L1/L2 control information (see Fig. 3) received through the HS-SCCH.

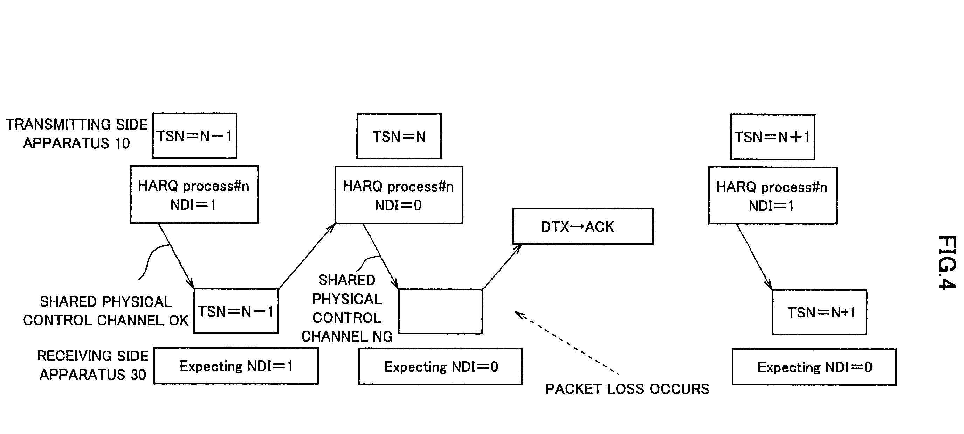

Then, when the TTI of the HS-DSCH is assigned to the mobile station itself, the mobile station is configured to determine whether or not a packet to be transmitted at the TTI is a new packet or a retransmission packet, on the basis of an "NDI (New Data Indicator (1 bit))" in the L1/L2 control information (see Fig. 4). According to the determination result, the mobile station is configured to perform the HARQ retransmission control in the MAC-hs layer.

Here, the "NDI" used in the conventional HSDPA mobile communication system is configured of 1 bit, and is configured to be updated when a new packet is transmitted. Specifically, the "NDI" is configured to be updated so as to cyclically take two values, for example, "0" → "1".
Non-Patent Document 1: 3GPP TS25.308

### Disclosure of the Invention

With reference to Fig. 4, descriptions will be given of the conventional HSDPA mobile communication system in cases where an "NDI=1" which is notified from the HS-SCCH is not consistent with an "Expecting NDI=0" which the receiving side apparatus 30 expects to receive next.

As a cause of the above-described inconsistency, described will be a case in which the transmitting side apparatus 10 falsely detects reception of an ACK for the packet "TSN=N", and transmits a packet "TSN=N+1" to the receiving side apparatus 30, when the receiving side apparatus 30 is actually in the DTX state.

As shown in Fig. 4, when failing to perform reception processing (decoding processing) of L1/L2 control information transmitted through the HS-SCCH associated with the HS-PDSCH for transmitting the packet "TSN=N", the receiving side apparatus 30 cannot determine whether or not the packet is transmitted to the mobile station itself.

Accordingly, the receiving side apparatus 30 cannot decode the packet "TSN=N", which is transmitted through the HS-PDSCH following the HS-SCCH.

For this reason, the receiving side apparatus 30 cannot transmit transmission acknowledgement information, for example, an ACK/NACK, for the packet "TSN=N" (decoding result of the packet "TSN=N") through an HS-DPCCH (HARQ feedback physical channel). Hence, the receiving side apparatus 30 enters no-transmission operation called the "DTX: Discontinuous Transmission".

Here, when the transmitting side apparatus 10 falsely detects reception of an ACK for the packet "TSN=N" on the HARQ feedback physical channel, although the receiving side apparatus 30 is actually in the DTX (no-transmission) state due to a poor condition of the radio propagation path, the transmitting side apparatus 10 transmits a packet "TSN=N+1" as a new packet to the receiving side apparatus 30. This causes a problem that the packet "TSN=N" is lost in the receiving side apparatus 30.

Moreover, in such a case, the "NDI=1" notified by the transmitting side apparatus 10 through the HS-SCCH is inconsistent with the "Expecting NDI=0" which the receiving side apparatus 30 expects to receive next. Accordingly, there has been a problem that the receiving side apparatus 30 also discard the packet "TSN=N+1" without performing decoding processing thereon and thus the packet "TSN=N+1" is also lost.

The present invention has been made in view of the above-described problem, and has an object of providing a retransmission control method and a receiving side apparatus which are capable of keeping packet loss at a minimum when transmission acknowledgment information transmitted through an HARQ feedback physical channel is falsely detected in a transmitting side apparatus.

A first aspect of the present invention is summarized as a retransmission control method for performing a retransmission control for a packet transmitted from a transmitting side apparatus to a receiving side apparatus through a physical data channel, on the basis of transmission acknowledgment information on the packet, the retransmission control method including: a physical control channel transmitting step of transmitting, at the transmitting side apparatus, a new data indicator updated upon transmission of a new packet, through a physical control channel associated with the physical data channel; and a transmission acknowledgement information transmitting step of performing, at the receiving side apparatus, decoding processing on a packet received through the physical data channel at a current transmission opportunity, and transmitting, at the receiving side apparatus, transmission acknowledgment information on the packet on the basis of a result of the decoding processing, even when the receiving side apparatus has transmitted transmission acknowledgement information indicating a success of reception of a packet at a last transmission opportunity, and when a new data indicator received through the physical control channel at the current transmission opportunity is not updated.

In the first aspect, the last transmission opportunity and the current transmission opportunity can be assigned to the same HARQ process.

A second aspect of the present invention is summarized as a receiving side apparatus including: a physical control channel receiver unit configured to receive a physical control channel which includes new data updated upon transmission of a new packet; a physical data channel receiver unit configured to receive a physical data channel associated with the physical control channel; and a transmission acknowledgment information transmitter unit configured to perform decoding processing on a packet received through the physical data channel at a current transmission opportunity and to transmit transmission acknowledgment information on the packet on the basis of a result of the decoding processing, even when the transmission acknowledgment information transmitter unit has transmitted transmission acknowledgement information indicating a success of reception of a packet at a last transmission opportunity, and when a new data indicator received through the physical control channel at the current transmission opportunity is not updated.

In the second aspect, the last transmission opportunity and the current transmission opportunity can be assigned to the same HARQ process.

As described above, the present invention can provide a retransmission control method and a receiving side apparatus which are capable of keeping packet loss at a minimum when transmission acknowledge information transmitted through an HARQ feedback physical channel is falsely detected in the transmitting side apparatus.

### Brief Description of the Drawings

[Fig. 1] Fig. 1 is a diagram for explaining a state of a retransmission control in a mobile communication system according to a conventional technique.
[Fig. 2] Fig. 2 is a diagram showing a channel configuration used in the mobile communication system according to the conventional technique.
[Fig. 3] Fig. 3 is a diagram showing a format of a shared physical control channel used in the mobile communication system according to the conventional technique.
[Fig. 4] Fig. 4 is a diagram for explaining a problem in the retransmission control in the mobile communication system according to the conventional technique.
[Fig. 5] Fig. 5 is a functional block diagram of a transmitting side apparatus and a receiving side apparatus according to a first embodiment of the present invention.
[Fig. 6] Fig. 6 is a diagram for explaining a retransmission control in the mobile communication system according to the first embodiment of the present invention.
[Fig. 7] Fig. 7 is a functional block diagram of a transmitting side apparatus and a receiving side apparatus according to a second embodiment of the present invention.

### Best Modes for Carrying out the Invention

### (Mobile Communication System according to First Embodiment of Present Invention)

A configuration of a mobile communication system according to a first embodiment of the present invention will be described with reference to Fig. 5.

The mobile communication system according to this embodiment is configured to perform a retransmission control of a packet transmitted from a transmitting side apparatus 10 to a receiving side apparatus 30 through a physical data channel, on the basis of transmission acknowledgment information (ACK/NACK/DTX state) on the packet.

Here, an "HS-PDSCH" is assumed as an example of the physical data channel (shared physical data channel); an "HS-SCCH" is assumed as an example of a physical control channel (shared physical control channel); an "HS-DSCH" is assumed as an example of a transport channel multiplexed on the HS-PDSCH; an "MAC-hs PDU" is assumed as an example of a protocol data unit (packet) transmitted through the HS-DSCH. However, the present invention is not limited to these examples.

Moreover, the transmitting side apparatus 10 and the receiving side apparatus 30 according to the present invention are assumed to be applicable to both downlink communication (a case in which the transmitting side apparatus 10 is a base station and the receiving side apparatus 30 is a mobile station) and uplink communication (a case in which the transmitting side apparatus 10 is a mobile station and the receiving side apparatus 30 is a base station).

As shown in Fig. 5, as a function of a layer 2, the transmitting side apparatus 10 includes an RLC entity 11, a transmission buffer 12, a TSN adding unit 13, an HARQ entity 14, multiple HARQ processes 15, and a retransmission/scheduler function 18. Moreover, as a function of a layer 1, the transmitting side apparatus 10 includes a shared physical control channel transmitter unit 16A, a shared physical data channel transmitter unit 16B, and a dedicated physical control channel receiver unit 17.

The RLC entity 11 is configured to perform the above-described ARQ retransmission control. Note that the RLC entity 11 may be configured to perform the ARQ retransmission control for each packet, or may be configured to perform the ARQ retransmission control for each set of multiple packets.

The transmission buffer 12 is configured to temporarily store user data transmitted from the RLC entity 11, and to then transmit the user data to the TSN adding unit 13.

The TSN adding unit 13 is configured to generate the protocol data unit (packet) to be transmitted through the transport channel multiplexed on the shared physical data channel, by adding a header including a TSN, an error correction code (such as a CRC) and the like, to the user data transmitted from the transmission buffer 12.

The HARQ entity 14 is configured to allocate the HARQ process for transmitting each of the packets, in response to an instruction for an HARQ retransmission control, scheduling control or the like, from the retransmission/scheduler function 18.

Specifically, the HARQ entity 14 is configured to discard the user data stored in the transmission buffer 12, or to determine a packet to be transmitted (a new packet or a retransmission packet) in each transmission opportunity (each TTI in the above-described transport channel), in response to the instruction from the retransmission/scheduler function 18.

In addition, the HARQ entity 14 is configured to notify the shared physical control channel transmitter unit 16A of an "HARQ process #" which specifies the HARQ process to be used for transmitting the packet, in each transmission opportunity.

Each of the HARQ processes 15 is configured to instruct the shared physical data channel transmitter unit 16B to transmit a packet, when the HARQ entity 14 instructs the HARQ process 15 to transmit the packet (a new packet or a retransmission packet).

Moreover, each of the HARQ processes 15 is configured to update an NDI (new data indicator) when a new packet is transmitted, and to notify the shared physical control channel transmitter unit 16A of the NDI, in each transmission opportunity. Here, each of the HARQ processes 15 is configured not to update the NDI when a retransmission packet is transmitted in the corresponding transmission opportunity.

Moreover, each of the HARQ processes 15 is configured to notify the retransmission/scheduler function 18 of the transmission acknowledgement information (ACK/NACK) included in the dedicated physical control channel received by the dedicated physical control channel receiver unit 17.

The retransmission/scheduler function 18 is configured to perform the HARQ retransmission control and the scheduling control for each of the packets on the basis of the transmission acknowledgment information (ACK/NACK) notified from the corresponding HARQ process 15.

The shared physical control channel transmitter unit 16A is configured to transmit L1/L2 control information including the HARQ process# notified by the HARQ entity 14 and the NDI notified by the corresponding HARQ process 15, through the shared physical control channel (physical control channel) (see Fig. 3).

Here, the NDI (New Data Indicator) is configured of 1 bit, and is configured to be updated at the time of new packet transmission. For example, the NDI is configured to be updated so as to cyclically take two values "0" and "1", for example, "0"→"1"→"0". The initial value of the NDI may be "0" or "1".

The shared physical data channel transmitter unit 16B is configured to transmit the packet transmitted from each of the HARQ processes, at each TTI in the shared physical data channel (physical data channel). Note that the shared physical data channel is associated with the shared physical control channel.

The dedicated physical control channel receiver unit 17 is configured to receive transmission acknowledgement information such as ACK/NACK through the dedicated physical control channel (HARQ feedback physical channel), and to notify the corresponding HARQ process 15 of the transmission acknowledgement information.

Here, the dedicated physical control channel receiver unit 17 is configured to determine that the receiving side apparatus 30 is in the DTX state, when receiving no transmission acknowledgement information for each packet within a predetermined time period.

Meanwhile, as shown in Fig. 5, the receiving side apparatus 30 includes a shared physical control receiver unit 31A, a shared physical data channel receiver unit 31B, an HARQ entity 32A, multiple HARQ processes 32B, a dedicated physical control channel transmitter unit 33, a TSN extracting unit 34, a sequence control buffer 35, and an RLC entity 36.

The shared physical control channel receiver unit 31A is configured to receive L1/L2 control information from the transmitting side apparatus 10 through the shared physical control channel (physical control channel).

The shared physical control channel receiver unit 31A is configured to decode the L1/L2 control information transmitted through the shared physical control channel, and to then notify the HARQ entity 32A of the decoded L1/L2 control information.

The shared physical data channel receiver unit 31B is configured to transmit a packet transmitted through the shared physical data channel at each TTI, to the HARQ entity 32A on the basis of the L1/L2 control information transmitted through the shared physical control channel.

The HARQ entity 32A is configured to transmit the L1/L2 control information received from the shared physical control channel receiver unit 31A and the packet received from the shared physical data channel receiver unit 31B, to the corresponding HARQ process 32B.

Each of the HARQ processes 32B is configured to decode the packet transmitted from the HARQ entity 32A, on the basis of the L1/L2 control information transmitted from the HARQ entity 32A, and to then transmit the decoded packet to the TSN extracting unit 34.

In addition, each of the HARQ processes 32B is configured to generate transmission acknowledgement information (ACK/NACK), and then to notify the dedicated physical control channel transmitter unit 33 of the transmission acknowledgement information.

Specifically, each of the HARQ processes 32B is configured to generate transmission acknowledgement information (ACK/NACK) on the basis of the NDI included in the L1/L2 control information transmitted from the HARQ entity 32A (received NDI).

Each of the HARQ processes 32B is configured to perform decoding processing on the packet received through the physical data channel at the current TTI (transmission opportunity) even when transmission acknowledgement information (ACK) indicating a success of reception of a packet is transmitted at the last TTI (transmission opportunity) assigned to the HARQ process 32B and the NDI (new data indicator) received through the physical control channel at the current TTI (transmission opportunity) assigned to the HARQ process 32B is not updated, for example. Each of the HARQ processes 32B is configured to then generate transmission acknowledgement information (ACK/NACK) for the packet on the basis of the result from the decoding processing, and to notify the dedicated physical control channel transmitter unit 33 of the transmission acknowledgement information.

It is in a normal state when each of the HARQ processes 32B transmits transmission acknowledgement information (ACK) indicating a success of reception of a packet at the last TTI (transmission opportunity) assigned to the HARQ process 32B and the NDI (new data indicator) received through the physical control channel at the current TTI (transmission opportunity) assigned to the HARQ process 32B is updated. Accordingly, each of the HARQ processes 32B is, of course, configured to perform decoding processing on the packet received through the physical data channel at the current TTI (transmission opportunity), in such a case. Each of the HARQ processes 32B is configured to then generate transmission acknowledgement information (ACK/NACK) for the packet and to notify the dedicated physical control channel transmitter unit 33 of the transmission acknowledgement information.

Here, the last TTI (transmission opportunity) and the current TTI (transmission opportunity) are assumed to be assigned to the same HARQ process 32B.

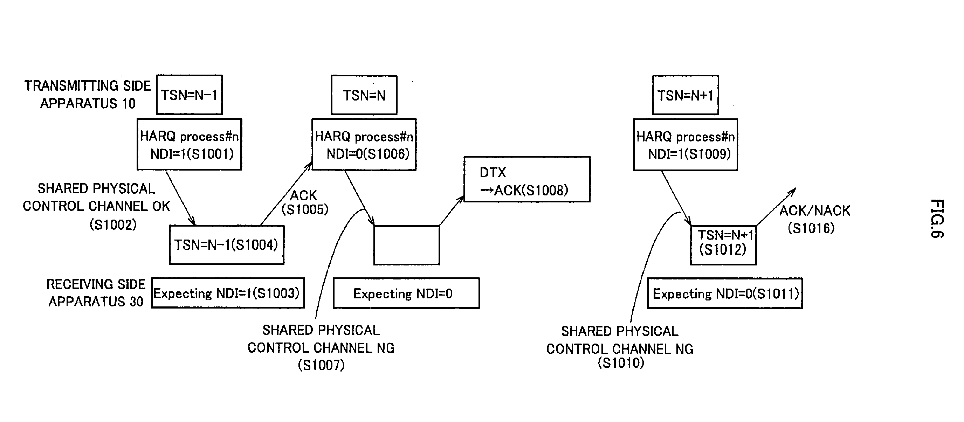

In this embodiment, the last TTI (transmission opportunity) and the current TTI (transmission opportunity) are recognized by each of the HARQ processes 32B. In an example shown in Fig. 6, assuming that the transmission opportunity at which the packet "TSN=N+1" is transmitted is the current TTI, the transmission opportunity at which the packet "TSN=N-1" is transmitted is the last TTI. This is because the HARQ process #n fails to receive the L1/L2 control information through the shared physical control channel at the transmission opportunity where the packet "TSN=N" is transmitted and hence the HARQ process #n cannot recognize that the transmission opportunity is assigned to the HARQ process #n itself.

Here, each of the HARQ processes 32B is configured to update the Expected NDI every time generating transmission acknowledgement information (ACK) for the packet.

Each of the HARQ processes 32B may be configured to discard a packet to the HARQ process 32B itself when receiving the packet before an elapse of an HARQ RTT (Round Trip Time).

Moreover, each of the HARQ processes 32B may be configured to discard a packet received at the current TTI when the NDI is not updated at the current TTI and the size of the packet (TBS: Transport Block Size) received at the current TTI is different from that of the packet received at the last TTI.

The dedicated physical control channel transmitter unit 33 is configured to transmit the transmission acknowledgment information (ACK/NACK) notified by each of the HARQ process 32B, through the dedicated physical control channel (HARQ feedback physical channel).

The TSN extracting unit 34 is configured to extract the TSN of the packet transmitted by each of the HARQ processes. The TSN extracting unit 34 is configured to then sequentially store the packets into the sequence control buffer 35 on the basis of the extracted TSNs, so as to transmit the packets to the RLC entity 36 in the order of the TSNs.

The RLC entity 36 is configured to refer to the TSN of the packet transmitted from the sequence control buffer 35, and to perform the ARQ retransmission control for the packet. Note that the RLC entity 36 may be configured to perform the ARQ retransmission control for each packet, or may be configured to perform the ARQ retransmission control for each set of multiple packets.

### (Operation of Mobile Communication System according to First Embodiment of Present Invention)

Operation of the mobile communication system according to this embodiment will be described below with reference to Fig. 6. Specifically, a description will be given of the retransmission control for the packet transmitted from a base station (the transmitting side apparatus 10) to a mobile station (the receiving side apparatus 30), in the mobile communication system according to this embodiment.

As shown in Fig. 6, in Step S1001, the base station transmits L1/L2 control information ("NDI=1") through the shared physical control channel (HS-SCCH, for example) in the HARQ process #n, and transmits the packet "TSN=N-1" through the shared physical data channel ("HS-PDSCH," for example), to the mobile station.

When succeeding in reception and decoding of the L1/L2 control information through the shared physical control channel in Step S1002, the mobile station determines whether or not the NDI received through the shared physical control channel (received NDI) is consistent with the NDI expected to be received next (Expected NDI).

Here, since the "received NDI (=1)" is identical to the "Expected NDI (=1)", the mobile station decodes the packet "TSN=N-1" included in the shared physical data channel, on the basis of the L1/L2 control information received through the shared physical control channel, in Step S1004.

In Step S1005, the mobile station transmits transmission acknowledgement information (ACK) indicating a success of decoding of the packet "TSN=N-1", to the base station through the HARQ feedback physical channel.

In Step S1006, the base station transmits L1/L2 control information ("NDI=0") through the shared physical control channel in the HARQ process #n, and transmits a packet "TSN=N" through the shared physical data channel ("HS-PDSCH", for example), to the mobile station.

In.Step S1007, the mobile station fails to receive and decode the L1/L2 control information through the shared physical control channel, and goes into the DTX state.

In Step S1008, the base station falsely detects reception of an ACK for the packet "TSN=N" through the HARQ feedback physical channel, due to a poor condition of a radio propagation path, although the mobile station is actually in the DTX state.

In Step S1009, the base station transmits L1/L2 control information ("NDI=1") through the shared physical control channel, and transmits a packet "TSN=N+1" through the shared physical data channel ("HS-PDSCH", for example), to the mobile station.

When succeeding in receiving and decoding of the L1/L2 control information through the shared physical control channel in Step S1010, the mobile station determines whether or not the NDI received through the shared physical control channel (received NDI) is consistent with the NDI expected to be received next (Expected NDI), in Step 1011.

Here, the "received NDI (=1)" is inconsistent with the "Expected NDI (=0) ". However, to prevent a loss of the packet "TSN=N+1", the mobile station decodes the packet "TSN=N+1" received through the shared physical data channel, on the basis of the L1/L2 control information received through the shared physical control channel, in Step S1012.

In Step S1016, the mobile station transmits transmission acknowledge information (ACK) indicating a success of decoding of the packet "TSN=N+1", to the base station through the HARQ feedback physical channel.

As a result, although the packet "TSN=N" is lost, a loss of the packet "TSN=N+1" is prevented. Accordingly, packet loss is kept at a minimum in the mobile station, compared with a case in which a packet is discarded when the received NDI and the NDI expected to be received next (Expected NDI) is inconsistent.

### (Effects and Advantages of Mobile Communication System according to First Embodiment of Present Invention)

In the mobile communication system according to this embodiment, even when an ACK is transmitted at the last TTI (transmission opportunity at which the packet TSN=N+1 is transmitted) and the NDI received through the shared physical control channel at the current TTI (transmission opportunity at which the packet TSN=N+1 is transmitted) is not updated, decoding processing is performed on the packet received through the shared physical data channel at the current TTI (transmission opportunity at which the packet TSN=N+1 is transmitted). Accordingly, a loss of a packet transmitted at the current TTI (transmission opportunity at which the packet TSN=N+1 is transmitted) can be prevented, and hence packet loss can be kept at a minimum (only the packet TSN=N).

### (Mobile Communication System according to Second Embodiment of Present Invention)

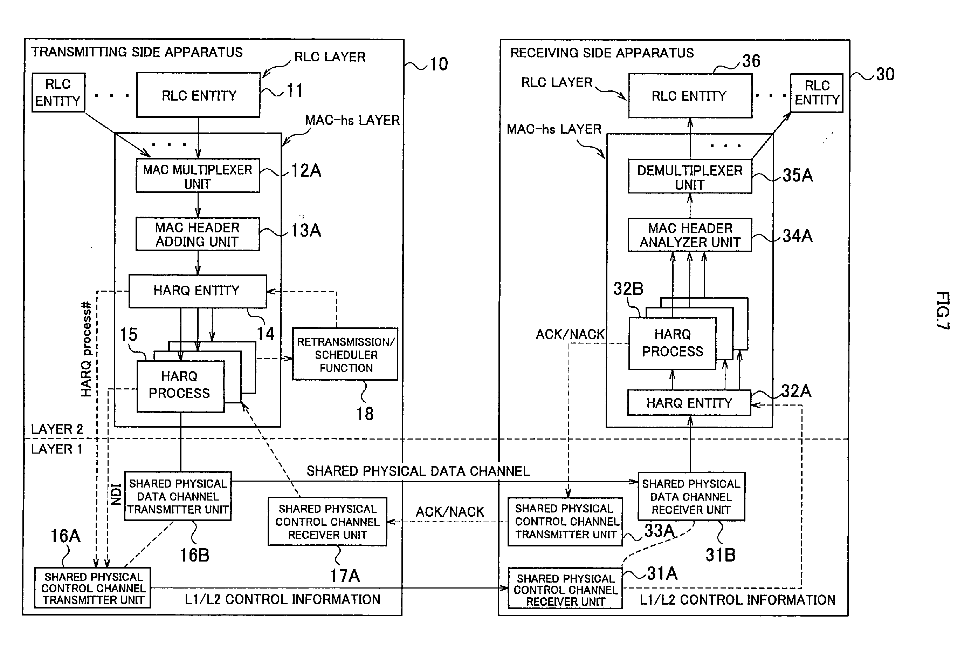

The mobile communication system according to a second embodiment of the present invention will be described with reference to Fig. 7. A description will be given of the mobile communication system according to this embodiment below mainly with respect to differences from the above-described mobile communication system according to the first embodiment.

A configuration of the mobile communication system according to this embodiment is in conformity with a configuration based on the LTE (Long Term Evolution).

Here, a "PDSCH: Physical Downlink Shared Channel" is used as a downlink shared physical data channel, and a "PDCCH: Physical Downlink Control Channel" is used as a downlink shared physical control channel.

A "PUCCH: Physical Uplink Control Channel" is used as an uplink shared physical control channel, and a "PUSCH: Physical Uplink Shared Channel" is used as an uplink shared physical data channel.

A "DL-SCH: Downlink Shared Channel" is used as a transport channel multiplexed on the PDSCH, and a "UL-SCH: Uplink Shared Channel" is used as a transport channel multiplexed on the PUSCH.

As shown in Fig. 7, a transmitting side apparatus 10 includes multiple RLC entities 11 corresponding respectively to logical channels. A receiving side apparatus 30 similarly includes multiple RLC entities 36 corresponding respectively to logical channels. The function of each of the RLC entities 11 and 36 is the same as that of corresponding one of the RLC entities 11 and 36 of the above-described first embodiment.

Moreover, the transmitting side apparatus 10 includes an MAC multiplexer unit 12A instead of a transmission buffer 12, an MAC header adding unit 13A instead of a TSN adding unit 13, and a shared physical control channel receiver unit 17A instead of a dedicated physical control channel receiver unit 17.

Meanwhile, the receiving side apparatus 30 includes a header analyzer unit 34A instead of a TSN extracting unit 34, a demultiplexer unit 35A instead of a sequence control buffer 35, and a shared physical control channel transmitter unit 33A instead of a dedicated physical control channel transmitter unit 33.

The MAC multiplexer unit 12A is configured to multiplex and temporarily store user data transmitted from the multiple RLC entities 11, and to then transmit the user data to the MAC header adding unit 13A.

The MAC header adding unit 13A is configured to generate a protocol data unit (packet) to be transmitted through the transport channel multiplexed on the shared physical data channel, by adding an MAC header, an error correction code (such as CRC) and the like, to the user data transmitted from the MAC multiplexer unit 12A.

The shared physical control channel receiver unit 17A is configured to receive transmission acknowledgement information such as an ACK/NACK through the shared physical control channel (HARQ feedback physical channel), and to notify the HARQ process 15 of the transmission acknowledgement information.

Here, the shared physical control channel receiver unit 17A is configured to determine that the receiving side apparatus 30 is in a DTX state, when receiving no transmission acknowledgement information for each packet within a predetermined time period.

The shared physical control channel transmitter unit 33A is configured to transmit the transmission acknowledgement information (ACK/NACK) notified by each HARQ process 32B, through the shared physical control channel (HARQ feedback physical channel).

The header analyzer unit 34A is configured to analyze the header of a packet transmitted from each HARQ process 32B, and to store the packets in the demultiplexer unit 35A to transmit the packets respectively to the multiple RLC entities 36.

The demultiplexer unit 35A is configured to demultiplex the packets to the multiple RLC entities, and to transmit the packets respectively to the RLC entities 36.

Moreover, although an ACK/NACK is configured to be transmitted through the uplink shared physical control channel associated with the downlink shared physical control channel, an ACK/NACK may be configured to be transmitted through the dedicated physical control channel.

The present invention has been described above in detail by using the above-described embodiments. However, it is obvious to those skilled in the art that the present invention is not limited to the embodiments described in the description of the present application. The present invention can be implemented as a modified or changed form without departing from the aim and the scope of the present invention determined by the description of the scope of claims. Thus, what is described in this description is intended to illustrate the present invention, and is not intended to impose any limitations on the present invention.

It is to be noted that the entire contents of Japanese Patent Application No. 2007-031382 (filed on February 9, 2007) is incorporated into the description of the present application.

As described above, the retransmission control method and the receiving side apparatus according to the present invention can provide a retransmission control method and a receiving side apparatus which are capable of keeping packet loss at a minimum when transmission acknowledge information transmitted through an HARQ feedback physical channel is falsely detected in the transmitting side apparatus.

## Claims

1. A retransmission control method for performing a retransmission control for a packet transmitted from a transmitting side apparatus to a receiving side apparatus through a physical data channel, on the basis of transmission acknowledgment information on the packet, the retransmission control method comprising:
a physical control channel transmitting step of transmitting, at the transmitting side apparatus, a new data indicator updated upon transmission of a new packet, through a physical control channel associated with the physical data channel; and
a transmission acknowledgement information transmitting step of performing, at the receiving side apparatus, decoding processing on a packet received through the physical data channel at a current transmission opportunity, and transmitting, at the receiving side apparatus, transmission acknowledgment information on the packet on the basis of a result of the decoding processing, even when the receiving side apparatus has transmitted transmission acknowledgement information indicating a success of reception of a packet at a last transmission opportunity, and when a new data indicator received through the physical control channel at the current transmission opportunity is not updated.

2. The retransmission control method according to claim 1, wherein the last transmission opportunity and the current transmission opportunity are assigned to the same HARQ process.

3. A receiving side apparatus comprising:
a physical control channel receiver unit configured to receive a physical control channel which includes new data updated upon transmission of a new packet;
a physical data channel receiver unit configured to receive a physical data channel associated with the physical control channel; and
a transmission acknowledgment information transmitter unit configured to perform decoding processing on a packet received through the physical data channel at a current transmission opportunity and to transmit transmission acknowledgment information on the packet on the basis of a result of the decoding processing, even when the transmission acknowledgment information transmitter unit has transmitted transmission acknowledgement information indicating a success of reception of a packet at a last transmission opportunity, and when a new data indicator received through the physical control channel at the current transmission opportunity is not updated.

4. The receiving side apparatus according to claim 3, wherein the last transmission.opportunity and the current transmission opportunity are assigned to the same HARQ process.
